# EUROPEAN PATENT SPECIFICATION

(11) **EP 2 331 828 B1**
(45) Date of publication and mention of the grant of the patent: **06.05.2020**
(21) Application number: 08875928.7
(22) Date of filing: 25.09.2008
(51) Int. Cl.: F15B 21/04, B60T 17/00

(54) **DEVICE FOR PROVIDING AIR UNDER PRESSURE AND AUTOMOTIVE VEHICLE EQUIPPED WITH SUCH A DEVICE**
VORRICHTUNG ZUR ZUFÜHRUNG VON DRUCKBEAUFSCHLAGTER LUFT UND MIT SOLCH EINER VORRICHTUNG AUSGESTATTETES FAHRZEUG
DISPOSITIF D'AMENÉE D'AIR SOUS PRESSION ET VÉHICULE AUTOMOBILE ÉQUIPÉ D'UN TEL DISPOSITIF

(43) Date of publication of application: 15.06.2011
(73) Proprietor: Volvo Lastvagnar AB, 405 08 Göteborg (SE)
(72) Inventor: BLANC, Xavier, F-69680 Chassieu (FR)
(74) Representative: Goreaud, Alexandra
(86) International application number: PCT/IB2008/055623
(87) International publication number: WO 2010/035073

(56) References cited:
- EP-A- 1 406 805
- DE-A1- 3 606 817
- DE-A1-102006 037 311
- DE-U1- 9 016 423
- US-A- 3 368 443
- US-B1- 6 217 762

## Description

### TECHNICAL FIELD OF THE INVENTION

This invention concerns a device for providing air under pressure to a subsystem of an automotive vehicle. This invention also concerns an automotive vehicle, in particular a truck, equipped with such a system.

### BACKGROUND OF THE INVENTION

Automotive vehicles, in particular trucks, are often provided with subsystems which use compressed air to drive some actuators belonging e.g. to a braking subsystem or a suspension subsystem. Therefore, it is known, e.g. from EP-A-1 406 805, to install on an industrial vehicle a device for treating compressed air and providing air to such subsystems.

Such a device can be provided with a cartridge including a desiccator medium and/or an oil filter medium in order to provide the or each subsystem with dry and/or clean air. Such a cartridge is generally mounted onto a base member which includes valves and other control equipments. It is supposed to be changed during maintenance operations of the truck. To this purpose, it is known to use a cartridge and a base member provided with corresponding threads, which allows to screw the cartridge on the base member. A dedicated strap wrench must be used to tighten the cartridge on the base member and, conversely, to untighten it after several months or years of use. Such a strap wrench is a special tool adapted for cartridges with a diameter less than 140 mm and cannot be used with cartridges of greater diameter.

It is known from US-B-6 217 762 to provide a cartridge itself with holes, straps or ribs adapted to cooperate with a driving tool. Such elements increase the cost of the cartridge and can be quite disturbing for a mechanics who does not know, at first glance, how to drive the cartridge in rotation. Document DE 3606817 A1 discloses an air drying cartridge including a body made of a top part and a cover. The cover has an internal thread for its mounting onto a desiccator. Several notches are provided on the cover in order to cooperate with a hook wrench. Alternatively it may be provided with one or several transversal holes for the engagement of a stem.

It is also known from DE-A-10 2006 037 311 to use a ring in order to immobilize a cartridge onto a base member. This ring is supposed to be tightened on the base member by hand, which is possible during the manufacturing process of a vehicle. However, when this ring is supposed to be untightened after several months or years, or to be tightened again during a further maintenance operation, it is almost impossible for a mechanics to exert by hand a torque large enough to untighten or efficiently tighten the ring.

US 3 368 443 discloses a nut having an annular flange and hub radially inside the annular flange and concentric to the annular flange. The annular flange comprises axial teeth distributed on the outer edge of the annular flange. The end of a screwdriver can be engaged between two successive teeth of the nut up to a rib of the hub and according to a direction that is mainly radial with respect to the axis of rotation of the nut.

### SUMMARY OF THE INVENTION

This invention relates to a device for providing air under pressure to a subsystem of an automotive vehicle, where a cartridge can be easily and efficiently immobilized onto a base member, without having to use a dedicated or special tool.

To this purpose, the invention concerns a device according to claim 1.

Thanks to the invention, the locking ring can be driven in rotation around its axis of rotation, either to lock a cartridge onto the base member or to unlock the cartridge, with any tool having an elongated member, e.g. a screwdriver having a stem.

According to advantageous but non compulsory aspects of the invention, such a device might incorporate any one of the following features:
- The abutment zones are angularly offset from each other with respect to the axis of rotation
- The minimum radial distance between the first and second surfaces is less than 30 mm, preferably less than 10 mm
The device includes several pins extending each along a direction parallel to the axis of rotation of the ring and distributed around this axis, each pin having a peripheral surface whose part oriented toward the axis of rotation is adapted to form an abutment zone for an elongated member introduced into the volume defined by the locking ring. In such a case, the distance between two adjacent pins is less than 100 mm, preferably less than 40 mm. Each pin of a pair of two adjacent pins can form an abutment zone for an elongated member introduced into the volume between these two adjacent pins. According to a first embodiment, each pin is cylindrical, with a circular cross section. According to another embodiment, each pin is cylindrical, and the pins are distributed in at least two series of pins with different cross sections. The pins of a first series can have a circular cross section, whereas the pins of a second series have an oblong cross section. According to other embodiments, each pin is cylindrical, with a rectangular cross section or an arcuate cross section with a point angle between 40° and 85°.
- Alternatively, the ring includes at least a partition extending in a direction parallel to the axis of rotation and perpendicular to a straight line extending radially from this axis, whereas this partition forms the first surface.
- The device includes an end wall forming an abutment zone for a distal end of an elongated member introduced within the volume defined by the locking ring.
- The ring is provided with two walls perpendicular to its axis of rotation and the above-mentioned volume is defined between these two walls.
- The internal surface is continuous and extends over 360° around the axis of rotation.

This invention also concerns an automotive vehicle, in particular a truck, equipped with at least a device as mentioned here-above for providing air under pressure to at least one subsystem of the vehicle, such as a braking system or a suspension system.

### BRIEF DESCRIPTION OF THE DRAWINGS

The invention will be better understood on the basis of the following description, which is given in correspondence with the annexed figures and as an illustrative example, without restricting the object of the invention which is defined in the appended claims. In the annexed figures:
- figure 1 is a perspective view of a device according to the invention;
- figure 2 is a top view of the device of figure 1;
- figure 3 is a partial sectional view, on a larger scale and along line III-III on figure 2, of the ring of the device of figures 1 and 2; ,
- figure 4 is a top view of the cartridge and the ring of the device of figures 1 and 2, showing how to drive the ring in rotation, thanks to a screwdriver;
- figure 5 is a top view similar to figure 4 for a device according to a second embodiment of the invention;
- figure 6 is a top view similar to figure 4 for a device according to a third embodiment of the invention;
- figure 7 is a top view similar to figure 4 for a device according to a fourth embodiment of the invention;
- figure 8 is a top view similar to figure 4 for a device according to a fifth embodiment of the invention;
- figure 9 is a top view similar to figure 2 for a device according to a sixth embodiment of the invention; and
- figure 10 is a partial sectional view, on a larger scale and along line X-X on figure 9, of the ring of the device of figure 2.

### DETAILED DESCRIPTION OF SOME EMBODIMENTS

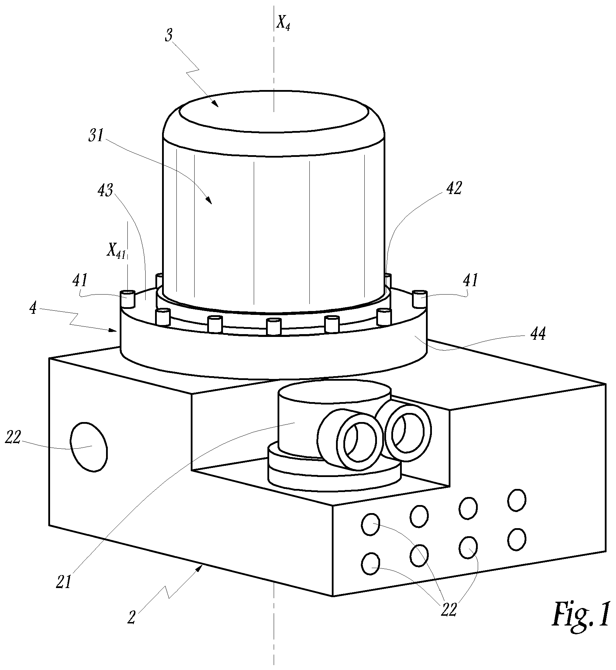

The device 1 represented on figure 1 comprises a base member 2 provided with a control valve 21 and several orifices 22 where ducts can be connected. A main orifice 22 is visible on the left of figure 1 where an inlet duct can be connected and several outlet orifices 22 are visible on the right on figure 1.

Device 1 can be used to provide air under pressure to a braking system and/or a suspension system of a truck, these systems being connected by non-represented ducts to the outlet orifices 22. Device 1 is provided with a desiccator cartridge 3 which is held in position on base member 2 by a bayonet ring 4. Ring 4 is provided with protruding parts which are not visible on figure 1 but enable to lock ring 4 onto base member 2 by a rotation of 60° or 90° around an axis X₄. Axis X₄ is also a central axis for the outer peripheral surface 31 of cartridge 3.

According to an alternative embodiment of the invention, ring 4 can also be provided with an internal thread, whereas base member 2 is provided with an external thread, thus allowing tightening or locking of ring 4 on base member 2 by screwing.

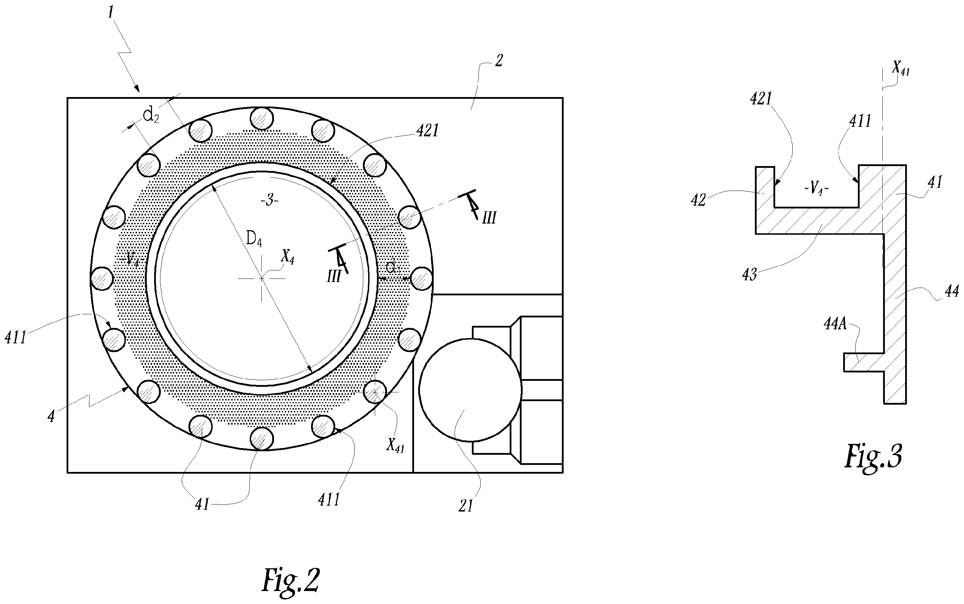

Ring 4 is provided with sixteen pins 41 evenly distributed around axis X₄, each pin 41 being centered on an axis X₄₁ parallel to axis X₄. Each pin 41 is cylindrical with a circular cross section, as shown on figure 2. Ring 4 is also provided with a peripheral collar 42 which extends all around axis X₄, that is on 360°, around this axis.

Pins 41 and collar 42 extend from an annular wall 43, which is perpendicular to axis X₄ and perpendicular to an cylindrical skirt 44 extending away from pins 41, starting on wall 43. Skirt 44 is located on the outer periphery of annular wall 43, while collar 42 is located on the inner periphery of annular wall 43. Skirt 44 has several internal protruding parts, one of which is visible on figure 3 with reference 44A, which form bayonet type locking means and cooperate with non represented corresponding parts of base member 2 to lock ring 4.

An annular volume V₄ is defined on top of wall 43 between the circular row of pins 41 and collar 42. Volume V₄ is identified on figure 2 with black dots on wall 43.

This volume is easily accessible either laterally or from the top of ring 4, as shown on figure 1.

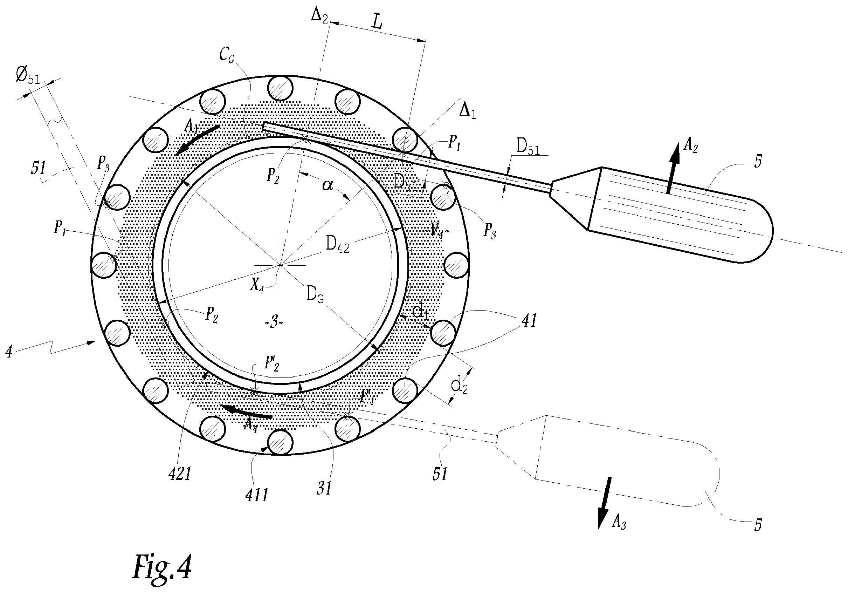

As shown on figure 4, the stem 51 of a screwdriver 5 can be introduced within volume V₄ in order to exert on ring 4 a tightening torque, as shown by arrow A₁. In order to exert this tightening force, one must push screwdriver 5 with a transverse effort A₂ which brings stem 51 into contact with one of the pins 41 at the level of a first point P₁, on figure 4, and with collar 42 at the level of a second point P₂. Δ₁ denotes a straight line extending radially with respect to axis X₄ and crossing point P₁. Δ₂ denotes a straight line extending radially with respect to axis X₄ and crossing point P₂. Points P₁ and P₂ are offset angularly with respect to axis X₄, as shown by angle α between straight lines A₁ and Δ₂.

The two contact points P₁ and P₂ allow to transmit to ring 4 an effort A₂ exerted on screwdriver 5, this effort resulting in torque A₁.

One notes 411 the peripheral surface of a pin 41 and 421 the outer peripheral surface of collar 42. Points P₁ and P₂ are defined respectively on these surfaces, so that these surfaces each form an abutment zone for stem 51 when effort A₂ is exerted on screwdriver 5. Surface 411 can be said to be "external", insofar as it is radially close to the external limit of volume V₄, whereas surface 421 can be said to be "internal" insofar as it constitutes the radial inner boundary of volume V₄.

X₅₁ denotes the central longitudinal axis of stem 51. When stem 51 is partially introduced into volume V₄ and lies against surface 421 and surface 411 of one of pins 41, axis X₅₁ is tangential to a geometrical circle C_{G} centered on axis X₄ and having a diameter D_{G} corresponding to the sum of the diameter D₄₂ of surface 421 and the diameter D₅₁ of stem 41.

When engaged between pins 41 and collar 42, stem 51 converts effort A₂ into torque A₁ with respect to point P₂, with a lever arm L equal to the distance between points P₁ and P₂ along axis X₅₁.

d₁ denotes the minimum radial distance between surface 421 and the closest part of surface 411 of one of pins 41. Distance d₁ is a radial distance insofar as it is taken parallely to a radius of ring 4. Distance d₁ is chosen less than 40 mm, preferably less than 10 mm. For example, distance d₁ can be equal to 8 mm for a ring 4 having an internal diameter D₄ equal to 135 mm.

d₂ denotes the minimum distance between two adjacent pins 41. Distance d₂ is chosen less than 100 mm, preferably less than 60 mm, most preferably less than 40 mm. Satisfactory results have been obtained with distance d₂ equal to 30 mm.

Because of the values of distances d₁ and d₂, it is not possible to introduce a thick stem 51 within volume V₄. As shown on figure 4, when stem 51 is engaged within volume V₄, it comes into abutment against the surface 411 of one pin 41 when one exerts effort A₂. However, it can also come into abutment against the external surface 411 of an adjacent pin 41, as shown by point P₃. In other words, the room available for stem 51 in volume V₄ is between points P₁, P₂ and P₃ on figure 4. d₃ denotes the distance between points P₁ and P₃ on figure 4, this distance being taken perpendicularly to axis X₅₁. If diameter D₅₁ were larger than distance d₃, the room available fro stem 51 between two adjacent pins 41 would not be sufficient to accommodate this stem. This induces that stem 51 cannot be too rigid, with the consequence that, if effort A₂ is too intense, stem 51 will bend before a torque A₁ that would be too high is transferred to ring 4.

Distances d₁ and d₂ and the distribution of pins 41 around axis X₄ generate the value of distance d₃. This distance defines the maximum possible diameter Ø₅₁ of a stem to be introduced into volume V₄ between two adjacent pins 41. A stem 51 of maximum diameter is partially shown in dashed line on the left of figure 4. It bears simultaneously against points P₁, P₂ and P₃.

The maximum value Ø₅₁ of diameter D₅₁ is such that the maximum intensity of torque A₁ can be limited, which avoids or limits the risks of overtightening ring 4 onto base member 2.

When one wants to unlock ring 4 from base member 2, one introduces stem 51 in the opposite direction in volume V₄, as shown in dashed lines on the lower part of figure 4. It is then possible to exert a transverse effort A₃ on screwdriver 5 in order to bring stem 51 into contact with surface 421 and one of surfaces 411, at the level of two points, respectively P'₂ and P'₁. This enables to transfer a torque A₄ to ring 4, in the direction opposite to arrow A₁.

This first embodiment is advantageous insofar as it is very simple, in particular due to the circular cross section of the pins 41.

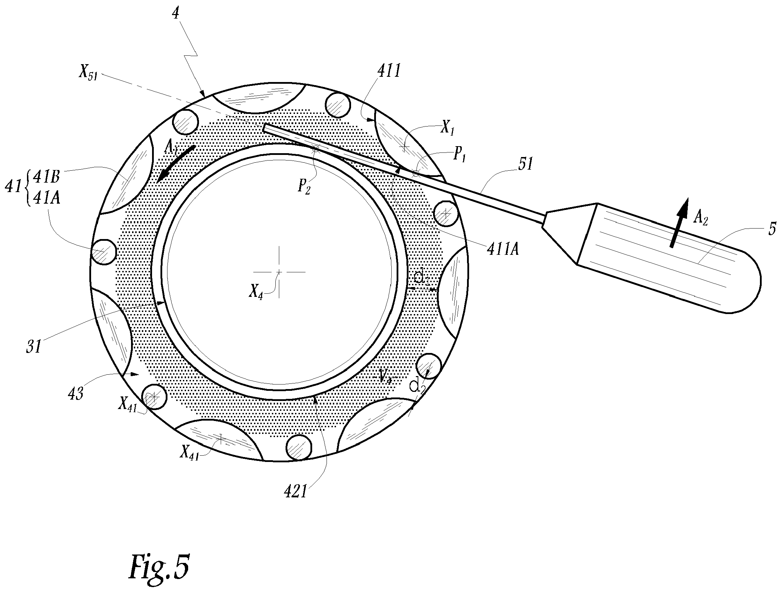

In the other embodiments of the invention shown on figures 5 to 10, elements similar to the ones of the first embodiment have the same references.

In the embodiment of figure 5, a volume V₄ is defined between a continuous collar 42 of a ring 4 and a series of pins 41 which extends around collar 42, parallel to an axis of rotation X₄ of ring 4 and from an annular wall 43 of ring 4 which is perpendicular to axis X₄. Collar 42 surrounds the external surface 31 of a cartridge 3.

Two types of pins 41 are used in this embodiment. A first series of cylindrical pins 41A, with a cylindrical cross section, is used, together with a second series of cylindrical pins 41B having an oblong cross section. Each pin is centered on an axis X₄₁ parallel to axis X₄. The oblong cross section of pins 41B allows the stem 51 of a screwdriver 5 to lie against a part 411A of the surface 411 of a pin 41B which has a radius of curvature larger than the radius of curvature of the external surface 411 of a pin 41A. The shape of pins 41B induces, as compared to the first embodiment, a better resistance to a transverse effort A₂ exerted on screwdriver 5, so that a locking torque A₁ can be efficiently transmitted to ring 4. As in the first embodiment, the respective radial surfaces 411 and 421 of pins 41 and collar 42 form abutment zones for stem 51, these zones being shown by points P₁ and P₂ on figure 5. Distances d₁ and d₂, defined as in the first embodiment, allow to control the position of stem 51 within volume 4 and to limit the maximum admissible diameter of stem 51.

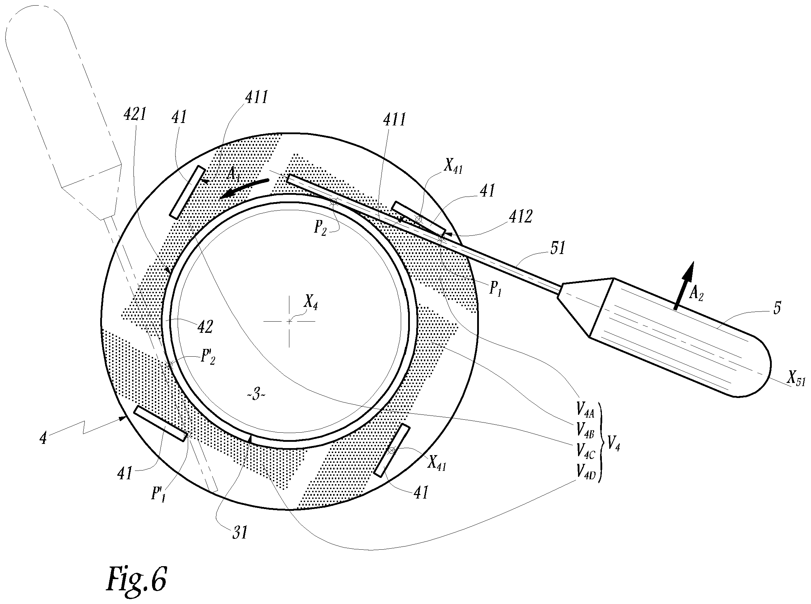

In the third embodiment of figure 6, four pins 41 are used, each pin being cylindrical with a rectangular cross section centered on an axis X₄₁ parallel to an axis of rotation X₄ of the ring 4 around a cartridge 3. Volume V₄ is made of four individual volumes V_{4A}, V_{4B}, V_{4C} and V_{4D} where the stem 51 of a screwdriver 5 can be inserted in order to transmit a transverse effort A₂ to ring 4, in order to generate a tightening torque A₁. In this embodiment, volume V₄ is defined between the outer surface 421 of collar 42 and a planar surface 411 of pins 41 which is oriented towards axis X₄, this planar surface forming an external surface with respect to each volume V_{4A}, V_{4B}, V_{4C} and V_{4D}.

Abutment zones are defined, as in the previous embodiments, at the level of points P₁ and P₂, by the external surfaces 411 and 421 of pins 41 and collar 42. Point P₁ is defined on an edge of a pin 41, between surface 411 and an end face 412 which is perpendicular to surface 411 and has a width corresponding to the thickness of pins 41.

Screwdriver 5 is used to convert a transverse effort A₂ into a tightening torque A₁ of ring 4. It can also be used for untightening ring 4, as shown in dashed lines, even if the orientation of pins 41 is less favorable in this case. Points P'₁ and P'₂ are defined as in the first embodiment.

If one wants to use a similar construction for untightening or unscrewing ring 4, another series of pins 41, oriented differently, can be provided on ring 4.

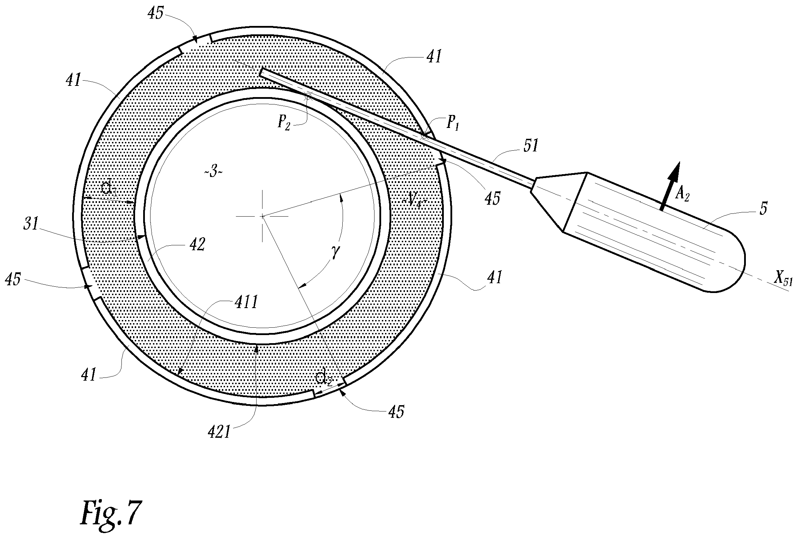

In the embodiment of figure 7, the ring 4 is also provided with a collar 42 having an external radial surface 421 and surrounding the radial external surface 31 of a cartridge 3. Four pins 41 are provided around collar 42, each pin extending from an annular wall 43 perpendicular to the axis of rotation X₄ of ring 4 and having an arcuate cross section. Actually, each pin 41 is in the form of an arcuate wall extending over an angular sector having a point angle γ of about 80°. Angle γ can have a value between 40° and 85°. An opening 45 is defined between each pair of two adjacent walls 41, which allows to introduce the stem 51 of a screwdriver 5 within the volume V₄ defined between surface 421 and the surfaces 411 of pins 41 oriented towards axis X₄. V₄ denotes the volume defined between arcuate pins 41 and collar 42. Surface 421 forms a radial internal surface for volume V₄ since it defines the radial inner boundary for volume V₄, whereas the internal parts of the surfaces 411 of pins 41 oriented towards axis X₄ form radial external surfaces defining the outer boundary of volume V₄.

d₁ denotes the radial distance between collar 42 and an arcuate pin 41. d₂ denotes the width of an opening 45. Distances d₁ and d₂ define the maximum diameter of a stem 51 of a screwdriver 5 that can be introduced within volume V₄. Abutment zones between a pin 41 and such a stem, on the one hand, and between collar 42 and such stem, on the other hand, are created, as shown respectively by points P₁ and P₂ on figure 7. As the embodiment of figure 6, point P₁ is on an edge of pin 41.

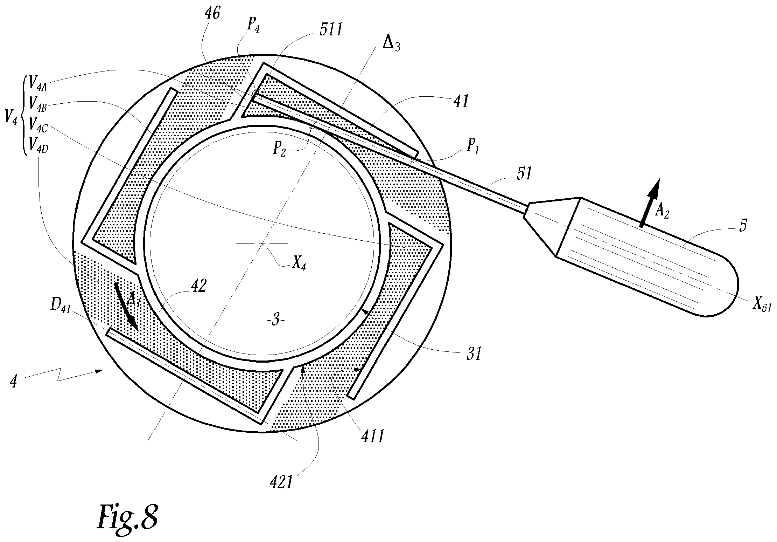

In the embodiment of figure 8, ring 4 is also provided with a collar 42 centered on an axis of rotation X₄ of ring 4 and surrounding the external surface 31 of cartridge 3. 421 denotes the outer radial surface of collar 42. Four rectilinear partitions 41 are distributed around collar 42. Each partition 41 is parallel to axis X₄ and extends along a direction D₄₁ which is perpendicular to a straight line Δ₃ extending radially from axis X₄ and crossing the center of this partition. Near one of its extremities, each partition 41 is connected to an end wall 46 which extends up to collar 42. Therefore, four volumes V_{4A}, V_{4B}, V_{4C} and V_{4D} form together a volume V₄ where a stem 51 of a screwdriver 5 can be inserted in order to transmit a transverse effort A₂ to ring 4 and to generate a tightening torque A₁. End walls 46 each form an abutment zone, represented by point P₄, for the tip 511 of stem 51.

As in the other embodiments, the internal surface 411 of a partition 41 and surface 421 form abutment zones for stem 51, as shown by points P₁ and P₂ on figure 8. Point P₁ is on an edge of a partition 41.

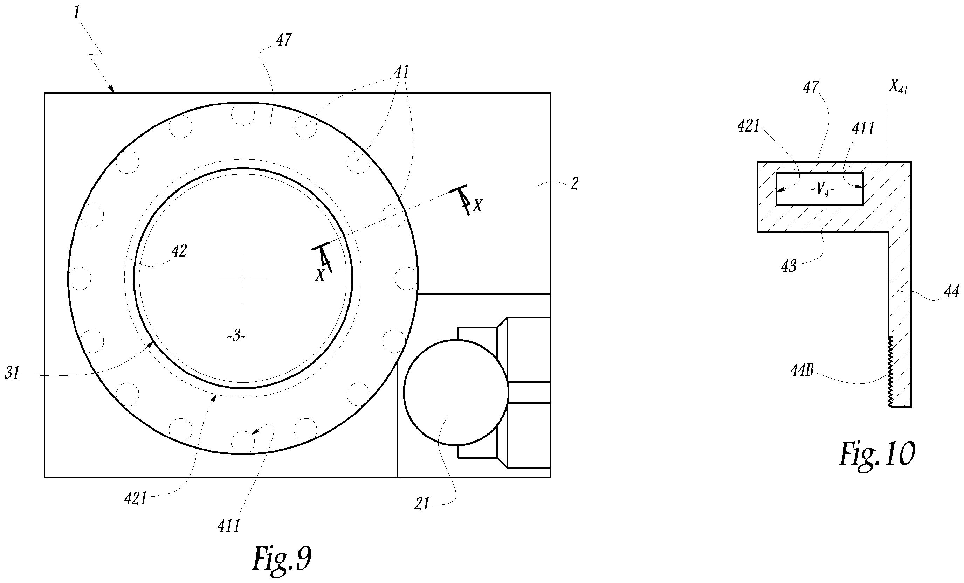

In the embodiment of figure 9, ring 4 is provided with a second annular wall 47 which is parallel to annular wall 43 and perpendicular to the axis of rotation X₄ of ring 4. This device 1 is similar to the one of the first embodiment and includes sixteen cylindrical pins 41 with circular cross section and one collar 42. A volume V₄ for the reception of an elongated member, like the stem of a screwdriver, is defined between the outer radial surfaces 421 of collar 42 and the radial surfaces 411 of pins 41. Annular wall 47 enhances the mechanical resistance of pins 41 which are connected to a solid member, 43 or 47, at both of their extremities.

A skirt 44 of ring 4 is provided with an internal thread 44B which can cooperate with a non represented thread of base member 2, in order to screw ring 4 on member 2.

The features of the respective embodiments mentioned here-above can be combined in the framework of the present invention. In particular, an annular wall similar to wall 47 of the embodiment of figures 9 and 10 can be used to strengthen the pins and partitions of the other embodiments. Ring 4 can be either of the bayonet type or of the screwed type in all embodiments.

In all embodiments, the central longitudinal axis X₅₁ of a stem 51 introduced within volume V₄ is tangential or substantially tangential to a circle similar to circle C_{G} mentioned here-above with respect to the first embodiment.

In all embodiments, the abutment zones defined respectively by the pins or partitions 41, on the one hand, and the external surface of collar 42, on the other hand, are angularly offset from each other, with respect to axis X₄, as explained for points P₁ and P₂ in the first embodiment.

In all embodiments, ring 4 can be integral, as shown on figure 3 and 10, or the pins 41 a partition 41 can be made of separate members mounted on ring 4, e.g. screwed or welded on wall 43.

In all embodiments, collar 42 forms the inner edge of ring 4 which is continuous and extends over 360° around the radial surface 31 of cartridge 3 and is centered on axis X₄. This allows surface 421 to form points P₂ or P'₂ in all positions of stem 51 introduced volume V₄.

In some embodiments described above, the ring 4 comprises pins 41 which extend each along a direction represented by axis X₄₁, which is purely parallel to the axis of rotation X₄. Nevertheless, especially in cases where there is no second annular wall such as wall 47, the pins 41 can be slightly inclined with respect to that direction, preferably so that each axis X₄₁ intersects axis X₄ somewhere above the plane of annular wall 43 when the ring is in a position such that wall 43 is horizontal and pins 41 are above this wall. The direction of axis X₄₁ may be inclined with respect to axis X₄ for example by an angle of 10° to 30°. In this manner, the stem 51 would be forced against wall 43 when screwing or unscrewing the ring 4, preventing an unwanted escape of the stem from the volume V₄.

A device according to the invention can be used to provide clean air to any subsystem of an automotive vehicle, e.g. a braking system, a suspension system, or any other pneumatic auxiliary system. A vehicle, in particular a truck, incorporating a device as described here-above is easier to maintain than known vehicles.

## Claims

1. A device (1) for providing air under pressure to a subsystem of an automotive vehicle, said device comprising a base member (2) and a cartridge (3) immobilized onto said base member by a locking ring (4), wherein said locking ring defines a volume (V₄) adapted to accommodate an elongated member (51), such that the locking ring can be driven in rotation around its axis of rotation, either to lock the cartridge onto the base member or to unlock the cartridge, **characterized in that** said volume (V₄) is adapted to accommodate an elongated member (51) having its main direction (X₅₁) tangential with respect to a circle (Co) centered on an axis of rotation (X₄) of said ring and **in that** said volume is defined between at least a first surface (411) and at least a second surface (421), each adapted to form an abutment zone (P₁, P₂) for said elongated member (51) introduced within said volume (V₄) wherein the ring is provided with a collar (42) which extends all around the axis of rotation (X₄) of the ring, and wherein the second surface (421) formed by an outer peripheral surface (421) of said collar (42) constitutes a radial inner boundary of said volume (V₄) and forms an abutment zone for the elongated member (51).

2. Device according to claim 1, **characterized in that** said abutment zones (P₁, P₂) are angularly offset from each other (α), with respect to said axis of rotation (X₄).

3. Device according to one of the previous claims, **characterized in that** the minimum radial distance (d₁), between said first (411) and second (421) surfaces is less than 30 mm, preferably less than 10 mm.

4. Device according to one of the previous claims, **characterized in that** it includes several pins (41) extending each along a direction (X₄₁) parallel to said axis of rotation and distributed around said axis (X₄), each pin having a peripheral surface (411) whose part oriented towards said axis is adapted to form an abutment zone (P₁) for an elongated member (51) introduced into said volume (V₄).

5. Device according to claim 4, **characterized in that** the distance (d₂) between two adjacent pins (41) is less than 100 mm, preferably less than 40 mm.

6. Device according to one of claims 4 or 5, **characterized in that** each pin (41) of a pair of two adjacent pins is adapted to form an abutment zone (P₁, P₃) for an elongated member introduced into said volume between said two adjacent pins.

7. Device according to one of claims 4 to 6, **characterized in that** each pin (41) is cylindrical, with a circular cross section.

8. Device according to one of claims 4 to 6, **characterized in that** each pin (41) is circular, **in that** the pins are distributed in at least two series of pins (41A, 41B) with different cross sections.

9. Device according to claim 8, **characterized in that** the pins (41A) of a first series have a circular cross section, whereas the pins (41B) of a second series have an oblong cross section.

10. Device according to one of claims 1 to 3, **characterized in that** said ring includes at least a partition (41) extending a direction (D₄₁) parallel to said axis of rotation (X₄) and perpendicular to a straight line (Δ₃) extending radially with respect to said axis, and **in that** said partition forms said first surface (411).

11. Device according to any of the previous claims, **characterized in that** it includes an end wall (46) forming an abutment zone (P₄) for a distal end (511) of an elongated member (51) introduced within said volume (V₄).

12. Device according to one of the previous claims, **characterized in that** said ring (4) is provided with two walls (43, 47) perpendicular to said axis of rotation and **in that** said volume (V₄) is defined between these two walls.

13. Device according to one of the previous claims, **characterized in that** said outer peripheral surface (421) is continuous and extends over 360° around said axis of rotation (X₄).

14. Automotive vehicle, in particular a truck, equipped with at least one device (1) according to one of the previous claims for providing air under pressure to at least one subsystem of said vehicle.

## Patentansprüche

1. Vorrichtung (1) zum Zuführen von druckbeaufschlagter Luft zu einem Teilsystem eines Kraftfahrzeugs, wobei die Vorrichtung ein Grundelement (2) und eine Kartusche (3) umfasst, die durch einen Klemmring (4) auf dem Grundelement immobilisiert ist, wobei der Klemmring ein Volumen (V₄) definiert, das angepasst ist, um ein langgestrecktes Element (51) aufzunehmen, sodass der Klemmring um dessen Drehachse in Drehung versetzt werden kann, entweder, um die Kartusche auf das Grundelement zu klemmen, oder um die Kartusche zu lösen, **dadurch gekennzeichnet, dass** das Volumen (V₄) angepasst ist, um ein langgestrecktes Element (51) aufzunehmen, dessen Hauptrichtung (X₅₁) in Bezug zu einem Kreis (C_{G}), der auf einer Drehachse (X₄) des Rings zentriert ist, tangential verläuft, und dadurch, dass das Volumen zwischen mindestens einer ersten Oberfläche (411) und mindestens einer zweiten Oberfläche (421) definiert ist, wobei jede angepasst ist, um eine Anschlagzone (P₁, P₂) für das langgestreckte Element (51) zu bilden, das innerhalb des Volumens (V₄) eingeführt ist,
wobei der Ring mit einem Kragen (42) bereitgestellt ist, der sich um die gesamte Drehachse (X₄) des Ringes herum erstreckt, und wobei die zweite Oberfläche (421), die durch eine Außenumfangsoberfläche (421) des Kragens (42) gebildet wird, eine radiale Innenbegrenzung des Volumens (V₄) darstellt und eine Anschlagzone für das langgestreckte Element (51) bildet.

2. Vorrichtung nach Anspruch 1, **dadurch gekennzeichnet, dass** die Anschlagzonen (P₁, P₂) in Bezug zu der Drehachse (X₄) winkelig voneinander versetzt sind (*α*).

3. Vorrichtung nach einem der vorstehenden Ansprüche, **dadurch gekennzeichnet, dass** der radiale Mindestabstand (d1) zwischen der ersten (411) und zweiten (421) Oberfläche weniger als 30 mm, vorzugsweise geringer als 10 mm beträgt.

4. Vorrichtung nach einem der vorstehenden Ansprüche, **dadurch gekennzeichnet, dass** sie mehrere Stifte (41) beinhaltet, die sich jeweils entlang einer Richtung (X₄₁) parallel zur Drehachse erstrecken und um die Achse (X₄) herum verteilt sind, wobei jeder Stift eine Umfangsoberfläche (411) aufweist, deren Teil, das zur Achse hin ausgerichtet ist, angepasst ist, um eine Anschlagzone (P₁) für ein langgestrecktes Element (51) zu bilden, das in das Volumen (V₄) eingeführt ist.

5. Vorrichtung nach Anspruch 4, **dadurch gekennzeichnet, dass** der Abstand (d₂) zwischen zwei benachbarten Stiften (41) weniger als 100 mm, vorzugsweise geringer als 40 mm beträgt.

6. Vorrichtung nach einem der Ansprüche 4 oder 5, **dadurch gekennzeichnet, dass** jeder Stift (41) eines Paares von zwei benachbarten Stiften angepasst ist, um eine Anschlagzonen (P₁, P₃) für ein langgestrecktes Element zu bilden, das in das Volumen zwischen zwei benachbarten Stiften eingeführt ist.

7. Vorrichtung nach einem der Ansprüche 4 bis 6, **dadurch gekennzeichnet, dass** jeder Stift (41) zylindrisch, mit einem kreisförmigen Querschnitt ist.

8. Vorrichtung nach einem der Ansprüche 4 bis 6, **dadurch gekennzeichnet, dass** jeder Stift (41) kreisförmig ist, dadurch, dass die Stifte in mindestens zwei Serien von Stiften (41A, 41B) mit unterschiedlichen Querschnitten verteilt sind.

9. Vorrichtung nach Anspruch 8, **dadurch gekennzeichnet, dass** die Stifte (41A) einer ersten Serie einen kreisförmigen Querschnitt aufweisen, während die Stifte (41B) einer zweiten Serie einen länglichen Querschnitt aufweisen.

10. Vorrichtung nach einem der Ansprüche 1 bis 3, **dadurch gekennzeichnet, dass** der Ring mindestens einen Teilbereich (41) beinhaltet, der sich in einer Richtung (D₄₁) parallel zu der Drehachse (X₄) und senkrecht zu einer geraden Linie (Δ₃) erstreckt, die sich in Bezug auf die Achse radial erstreckt, und dadurch, dass der Teilbereich die erste Oberfläche (411) bildet.

11. Vorrichtung nach einem der vorstehenden Ansprüche, **dadurch gekennzeichnet, dass** sie eine Abschlusswand (46) beinhaltet, die eine Anschlagzone (P₄) für einen distalen Abschluss (511) eines langgestreckten Elements (51) bildet, das in das Volumen (V₄) eingeführt ist.

12. Vorrichtung nach einem der vorstehenden Ansprüche, **dadurch gekennzeichnet, dass** der Ring (4) mit zwei Wänden (43, 47) senkrecht zu der Drehachse versehen ist, und dadurch, dass das Volumen (V₄) zwischen diesen beiden Wänden definiert ist.

13. Vorrichtung nach einem der vorstehenden Ansprüche, **dadurch gekennzeichnet, dass** die Außenumfangsoberfläche (421) durchgehend ist und sich über 360° um die Drehachse (X₄) herum erstreckt.

14. Kraftfahrzeug, insbesondere ein Lastkraftwagen, der mit mindestens einer Vorrichtung (1) nach einem der vorstehenden Ansprüche zum Zuführen von druckbeaufschlagter Luft zu mindestens einem Teilsystem des Fahrzeugs ausgerüstet ist.

## Revendications

1. Dispositif (1) pour fournir de l'air sous pression à un sous-système d'un véhicule automobile, ledit dispositif comprenant un élément de base (2) et une cartouche (3) immobilisée sur ledit élément de base par une bague de blocage (4), dans lequel ladite bague de blocage définit un volume (V₄) adapté pour recevoir un élément allongé (51), de sorte que la bague de blocage puisse être entraînée en rotation autour de son axe de rotation, soit pour bloquer la cartouche sur l'élément de base ou pour débloquer la cartouche,
**caractérisé en ce que** ledit volume (V₄) est adapté pour recevoir un élément allongé (51) dont la direction principale (X₅₁) est tangentielle à un cercle (C_{G}) centré sur un axe de rotation (X₄) de ladite bague et **en ce que** ledit volume est défini entre au moins une première surface (411) et au moins une deuxième surface (421), chacune étant adaptée pour former une zone de butée (P₁, P₂) pour ledit élément allongé (51) introduit dans ledit volume (V₄),
où la bague est pourvue d'un collier (42) qui s'étend tout autour de l'axe de rotation (X₄) de la bague, et où la deuxième surface (421) formée par une surface périphérique externe (421) dudit collier (42) constitue une limite interne radiale dudit volume (V₄) et forme une zone de butée pour l'élément allongé (51).

2. Dispositif selon la revendication 1, **caractérisé en ce que** lesdites zones de butée (P₁, P₂) sont décalées angulairement l'une par rapport à l'autre (α), par rapport audit axe de rotation (X₄).

3. Dispositif selon l'une des revendications précédentes, **caractérisé en ce que** la distance radiale minimale (d₁), entre lesdites première (411) et deuxième (421) surfaces est inférieure à 30 mm, de préférence inférieure à 10 mm.

4. Dispositif selon l'une des revendications précédentes, **caractérisé en ce qu'**il comporte plusieurs broches (41) s'étendant chacune selon une direction (X₄₁) parallèle audit axe de rotation et réparties autour dudit axe (X₄), chaque broche ayant une surface périphérique (411) dont la partie orientée vers ledit axe est adaptée pour former une zone de butée (P₁) pour un élément allongé (51) introduit dans ledit volume (V₄).

5. Dispositif selon la revendication 4, **caractérisé en ce que** la distance (d₂) entre deux broches adjacentes (41) est inférieure à 100 mm, de préférence inférieure à 40 mm.

6. Dispositif selon l'une des revendications 4 et 5, **caractérisé en ce que** chaque broche (41) d'une paire de deux broches adjacentes est adaptée pour former une zone de butée (P₁, P₃) pour un élément allongé introduit dans ledit volume entre lesdites deux broches adjacentes.

7. Dispositif selon l'une des revendications 4 à 6, **caractérisé en ce que** chaque broche (41) est cylindrique, de section transversale circulaire.

8. Dispositif selon l'une des revendications 4 à 6, **caractérisé en ce que** chaque broche (41) est circulaire, **en ce que** les broches sont réparties en au moins deux séries de broches (41A, 41B) ayant des sections transversales différentes.

9. Dispositif selon la revendication 8, **caractérisé en ce que** les broches (41A) d'une première série ont une section transversale circulaire, tandis que les broches (41B) d'une deuxième série ont une section transversale oblongue.

10. Dispositif selon l'une des revendications 1 à 3, **caractérisé en ce que** ladite bague comporte au moins une cloison (41) s'étendant dans une direction (D₄₁) parallèle audit axe de rotation (X₄) et perpendiculaire à une ligne droite (Δ₃) s'étendant radialement par rapport audit axe, et **en ce que** ladite cloison forme ladite première surface (411).

11. Dispositif selon l'une des revendications précédentes, **caractérisé en ce qu'**il comporte une paroi d'extrémité (46) formant une zone de butée (P₄) pour une extrémité distale (511) d'un élément allongé (51) introduit dans ledit volume (V₄).

12. Dispositif selon l'une des revendications précédentes, **caractérisé en ce que** ladite bague (4) est munie de deux parois (43, 47) perpendiculaires audit axe de rotation et **en ce que** ledit volume (V₄) est défini entre ces deux parois.

13. Dispositif selon l'une des revendications précédentes, **caractérisé en ce que** ladite surface périphérique externe (421) est continue et s'étend sur 360° autour dudit axe de rotation (X₄).

14. Véhicule automobile, en particulier un camion, équipé d'au moins un dispositif (1) selon l'une des revendications précédentes pour fournir de l'air sous pression à au moins un sous-système dudit véhicule.
